# EUROPEAN PATENT APPLICATION

(11) **EP 4 672 171 A1**
(43) Date of publication of application: **31.12.2025**
(21) Application number: 25181280.6
(22) Date of filing: 06.06.2025
(51) Int. Cl.: G06V 10/50, G06V 10/62, G06V 20/52

(54) **MONITORING CONTROL DEVICE, MONITORING METHOD, AND NON-TRANSITORY STORAGE MEDIUM**

(30) Priority: 26.06.2024 JP 2024103121
(71) Applicant: TOYOTA JIDOSHA KABUSHIKI KAISHA, Toyota-shi, Aichi-ken 471-8571 (JP)
(72) Inventor: YAMAZAKI, Masayuki, Toyota-shi, Aichi-ken,, 471-8571 (JP)
(74) Representative: Winter, Brandl - Partnerschaft mbB

(57) **Abstract**

A monitoring control device (30) includes a processor (33). The processor (33) is configured to monitor the behavior of an object in a predetermined area, based on a captured image in which the area appears. The processor (33) is configured to divide a predetermined range in the captured image into a plurality of blocks, and is configured to detect a motion vector of each of the blocks. The processor (33) is configured to determine, based on a direction and a size of the motion vector of each of the blocks, whether the object moving toward an entrance-exit of the area is present in the captured image, without detecting the object appearing in the captured image.

## Description

### BACKGROUND OF THE INVENTION

### 1. Field of the Invention

The present disclosure relates to a monitoring control device, a monitoring method, and a non-transitory storage medium.

### 2. Description of Related Art

Japanese Unexamined Patent Application Publication (Translation of PCT Application) No. 2018-523234 (JP 2018-523234 A) discloses a technology of identifying a human head of a passenger from video data, tracking the human head, and thereby determining an alighting act of the passenger.

### SUMMARY OF THE INVENTION

As described above, in the above-mentioned technology, detection of a human (identification of a human head) is performed based on video data. However, there are some cases where a plurality of passengers appears in a state of overlapping each other in video data, such as when the inside of a vehicle is crowded. In such cases, with the above-mentioned technology, there is a possibility that a human head of a passenger at the back cannot be detected. Moreover, when the level of illumination inside the vehicle is low (the inside of the vehicle is dark), such as in the night, since a human head does not clearly appear in video data in some cases, there is a possibility that a human head of a passenger cannot be detected.

As described above, when detection of a human from video data is performed, the easiness of the detection changes according to an environment in an area to be monitored, such as the degree of crowdedness and the level of illumination in the area. Accordingly, with the above-mentioned technology, there is a possibility that accuracy in determining an alighting act of a passenger is influenced by an in-vehicle environment.

The present disclosure provides a monitoring control device, a monitoring method, and a non-transitory storage medium that restrain accuracy in monitoring the behavior of an object present in a predetermined area from being influenced by an environment in the area.

A monitoring control device according to a first aspect of the present disclosure includes a processor. The processor is configured to monitor the behavior of an object in a predetermined area, based on a captured image in which the area appears. The processor is configured to divide a predetermined range in the captured image into a plurality of blocks, and is configured to detect a motion vector of each of the blocks. The processor is configured to determine, based on the direction and the size of the motion vector of each of the blocks, whether the object moving toward an entrance-exit of the area is present in the captured image, without detecting the object appearing in the captured image.

A monitoring method according to a second aspect of the present disclosure includes: monitoring the behavior of an object in a predetermined area, based on a captured image in which the area appears; dividing a predetermined range in the captured image into a plurality of blocks; and detecting a motion vector of each of the blocks. The monitoring method includes determining, based on the direction and the size of the motion vector of each of the blocks, whether the object moving toward an entrance-exit of the area is present in the captured image, without detecting the object appearing in the captured image.

A non-transitory storage medium stores instructions that are executable by one or more processors and that cause the one or more processors to perform functions. The one or more processors are included in a monitoring control device configured to monitor behavior of an object in a predetermined area based on a captured image in which the area appears. The functions comprise: dividing a predetermined range in the captured image into a plurality of blocks; detecting a motion vector of each of the blocks; and determining, based on a direction and a size of the motion vector of each of the blocks, whether the object moving toward an entrance-exit of the area is present in the captured image, without detecting the object appearing in the captured image.

According to the aspects of the present disclosure, the behavior of an object in a captured image is inferred based on the direction and the size of a motion vector of each block in the captured image, without detecting the object in the captured image in which a predetermined area appears. Accordingly, it is possible to restrain accuracy in monitoring the behavior of the object from being influenced by an environment in the area.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic configuration diagram of a monitoring system according to an embodiment of the present disclosure;
FIG. 2 shows a captured image in which a passenger area inside a bus appears;
FIG. 3 shows the captured image in which the passenger area inside the bus appears;
FIG. 4 shows a captured image in which a boarding-alighting door of the bus is opened, and the passenger area inside the bus and a boarding-alighting area outside the bus appear;
FIG. 5 is a flowchart that describes monitoring control according to the embodiment of the present disclosure; and
FIG. 6 is a flowchart that describes the monitoring control according to the embodiment of the present disclosure.

### DETAILED DESCRIPTION OF EMBODIMENTS

Hereinafter, embodiments of the present disclosure are described in detail with reference to the drawings. Note that in the description below, similar constituent elements are denoted by the same reference signs.

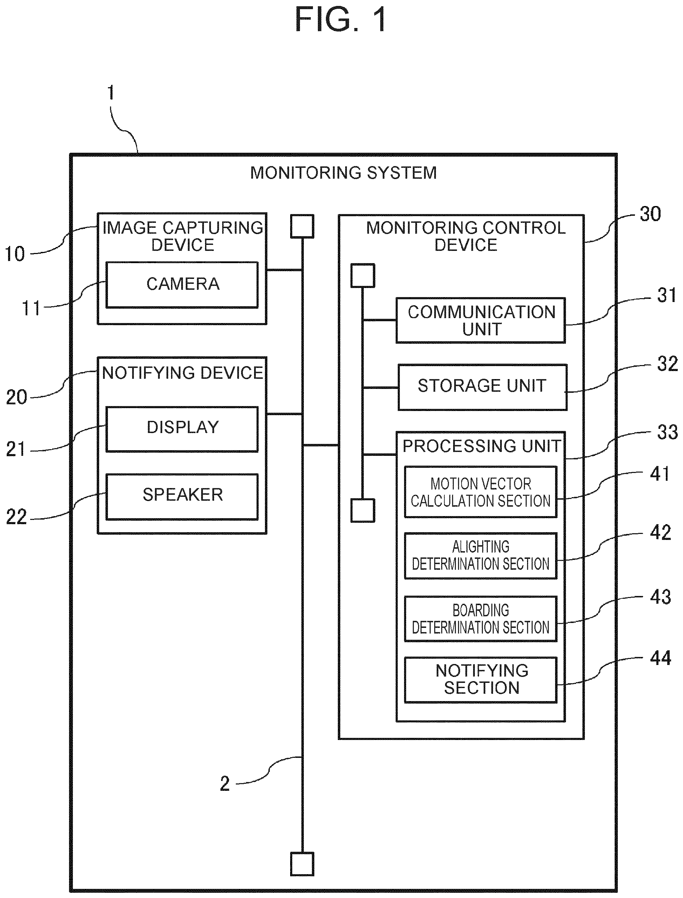

FIG. 1 is a schematic configuration diagram of a monitoring system 1 according to an embodiment of the present disclosure.

The monitoring system 1 includes an image capturing device 10, a notifying device 20, and a monitoring control device 30.

The image capturing device 10 generates a captured image in which the inside of a predetermined area to be monitored (hereinafter, referred to as "monitoring-target area") appears. In the present embodiment, for the image capturing device 10, one or more cameras 11 for capturing a passenger area in an autonomous driving shuttle bus are included. The camera 11 captures at least the passenger area inside the bus at a predetermined frame rate (for example, 10 [Hz] to 40[Hz]) and generates captured images in which the passenger area inside the bus appears. Each time the camera 11 generates captured images, the camera 11 transmits the generated captured images to the monitoring control device 30.

Note that although the present embodiment is described by using an example in which the monitoring-target area is a passenger area inside a bus as described above, the monitoring-target area, needless to say, is not limited to a passenger area inside a bus. For example, the monitoring-target area can be a partial area or the entire area inside a mobile object, such as a vehicle including a bus, a train, or a plane, or inside a room, a venue, or the like. The monitoring-target area may be the whole of a captured image, or may be a part thereof.

The notifying device 20 is a device for giving notice to the inside and the outside of the bus. In the present embodiment, for the notifying device 20, a display 21 for giving notice through sight and a speaker 22 for giving notice through hearing are included. The notifying device 20 displays, on the display 21, information (for example, character information or image information) according to a display signal received from the monitoring control device 30, and outputs, from the speaker 22, sound according to an audio signal received from the monitoring control device 30.

The monitoring control device 30 is an electronic control unit (ECU) including a communication unit 31, a storage unit 32, and a processing unit 33.

The communication unit 31 includes interface circuitry for connecting the monitoring control device 30 to an intra-network 2. The communication unit 31 supplies captured images received from the camera 11 to the processing unit 33. The communication unit 31 transmits a display signal and an audio signal output from the processing unit 33 to the notifying device 20.

The storage unit 32 includes a storage medium, such as a hard disk drive (HDD), a solid state drive (SSD), or a semiconductor memory, and stores various computer programs, data, and the like to be used in processing by the processing unit 33.

The processing unit 33 includes one or more central processing units (CPU) and peripheral circuity thereof, and executes the various computer programs stored in the storage unit 32. The processing unit 33 is, for example, a processor. The processing unit 33 may further include another computing circuit, such as a logical operation unit, an arithmetic operation unit, or a graphics processing unit. The processing unit 33 functions as a motion vector calculation section 41, an alighting determination section 42, a boarding determination section 43, and a notifying section 44 by executing processes according to a computer program, and operates as the functional sections (modules) that implement predetermined functions. In the description below, when the processes are described with each of the functional sections 41 to 44 as a subject, such description indicates that the processing unit 33 executes the program that implements each of the functional sections 41 to 44.

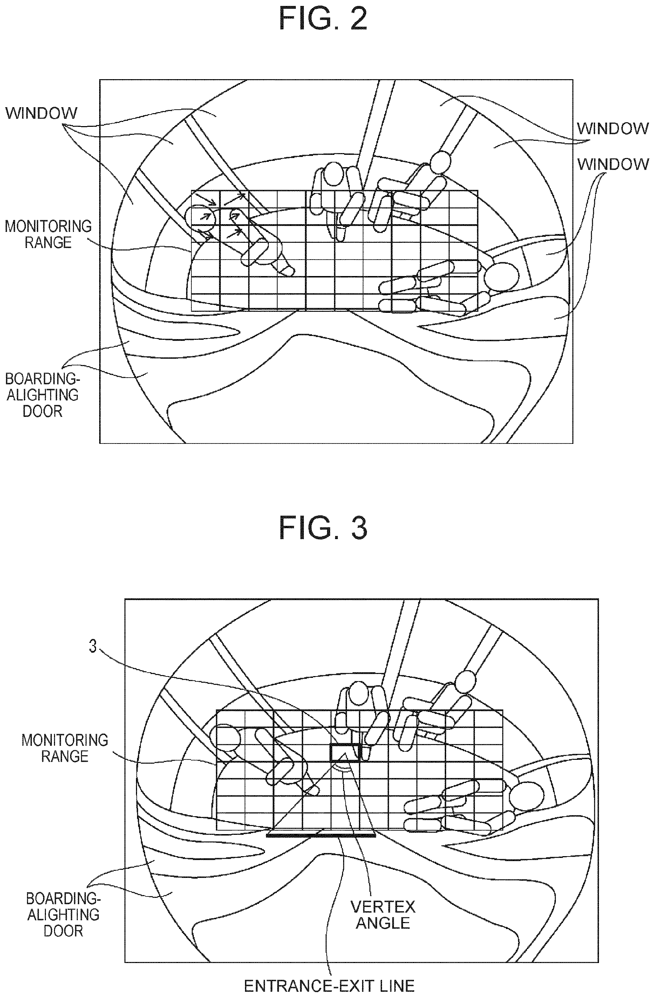

Hereinafter, details of the specific processes that are performed by the monitoring control device 30, that is, details of each of the functional sections 41 to 44 that are implemented by the processing unit 33 executing the processes according to the computer program are described, with reference to FIGS. 2 to 4 as necessary.

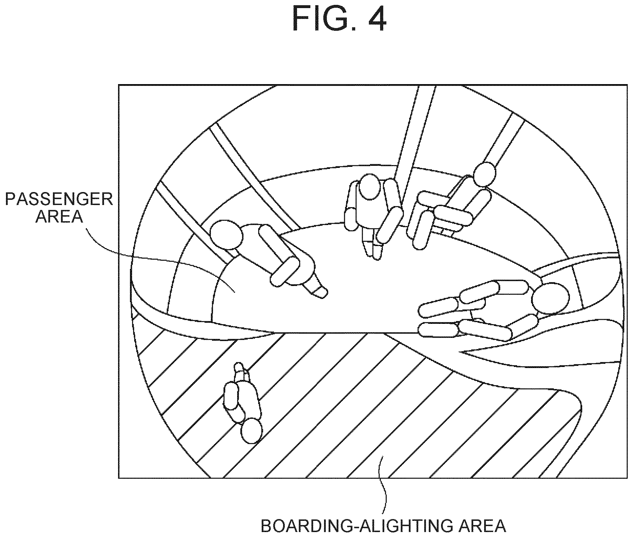

FIGS. 2 and 3 show a captured image in which a passenger area inside a bus appears, and is an image at a time when a boarding-alighting door of the bus is closed. FIG. 4 shows a captured image in which the boarding-alighting door of the bus is opened, and the passenger area (non-hatched area) inside the bus and a boarding-alighting area (hatched area) outside the bus appear.

The motion vector calculation section 41, based on captured images received from the camera 11, detects a motion vector that represents the direction and the size of a movement of an object between frames (still images) at different times. In the present embodiment, the motion vector calculation section 41 divides a preset monitoring range in each captured image into blocks of a predetermined size, and detects a motion vector of each block, as shown in FIG. 2. Note that although the direction and the size (corresponding to the length of an arrow) of a motion vector of a block is depicted only in some blocks in the upper left of the monitoring range in FIG. 2 to prevent complication of the drawing, motion vectors of all blocks are detected in actuality. In the present embodiment, each block has a plurality of pixels, and as an example thereof, the size (height × width) of a block is set to five pixels × five pixels.

Note that although the monitoring range may be set to any range in which the behavior of a passenger present in the passenger area can be tracked, it is preferable that a window portion not be included in the range as shown in FIG. 2. The reason is that if a window portion is included in the monitoring range, a motion vector representing the direction and the size of a movement of an object outside the window is detected, and it is made difficult to infer a behavior of a passenger inside.

The alighting determination section 42 determines, based on the direction and the size of the motion vector of each block, whether a passenger who is going to alight from the bus is present.

For example, the alighting determination section 42 extracts, from among the blocks, a block having a motion vector in a direction toward an entrance-exit (boarding-alighting door) of the bus, and calculates a sum value (hereinafter, referred to as "entrance-exit direction motion vector sum value") obtained by adding up the size (scalar value) of the motion vector of each extracted block. When the calculated entrance-exit direction motion vector sum value is a predetermined alighting determination threshold value or greater, the alighting determination section 42 can determine that a passenger who is going to alight from the bus is present.

Note that as a modification example, the alighting determination section 42 can use, for example, a sum value obtained by adding up the value (scalar value) of the size of a direction component toward the entrance-exit (boarding-alighting door) of the bus, of the motion vector of each block, for the entrance-exit direction motion vector sum value.

Determination of whether or not the direction of the motion vector of each block is toward the entrance-exit of the bus can be performed, for example, as follows, assuming that, for example, the direction of a motion vector is defined within a range of 360 degrees, such as the direction of a motion vector being an angle of zero degrees when the direction is squarely upward, and being an angle of 180 degrees when the direction is squarely downward. Specifically, as shown in FIG. 3, in determination of whether or not the direction of the motion vector of a certain block 3 is toward the entrance-exit of the bus, it is determined whether the direction of the motion vector of the block 3 comes within an angle range of a vertex angle of a triangle having the center of the block 3 as a vertex and a virtual entrance-exit line as a base. The virtual entrance-exit line is drawn at a portion corresponding to the entrance-exit of the bus (for example, a boarding-alighting door portion) or the like in the captured image. When the direction of the motion vector of the block 3 comes within the angle range of the vertex angle of the triangle, it can be determined that the direction of the motion vector of the block 3 is toward the entrance-exit of the bus.

As described above, according to the present embodiment, based on the direction and the size of the motion vector of each block in captured images, when it can be determined that there are many motions toward the entrance-exit of the bus in the captured images, it is determined that a passenger who is going to alight from the bus is present. In other words, according to the present embodiment, it is determined whether a passenger who is going to alight from the bus is present by inferring the behavior of the passenger in captured images, based on the direction and the size of the motion vector of each block in the captured images, without detecting the passenger (human) in the captured images. Accordingly, it is possible to restrain the determination from being influenced by an environment (for example, the degree of crowdedness, the level of illumination, or the like) in the bus.

As shown in FIG. 4, the boarding determination section 43 determines, based on captured images received from the camera 11, whether a passenger who is about to board the bus is present in a boarding-alighting area outside the bus. The boarding determination section 43, by sequentially inputting captured images into a discriminator, detects a human appearing in the boarding-alighting area in the captured images and tracks the detected human along a time series, and thereby determines whether a passenger who is about to board the bus is present in the boarding-alighting area outside the bus. The discriminator can be, for example, a convolutional neural network (CNN) including a plurality of convolutional layers connected in series from an input side toward an output side.

Note that the determination of whether a passenger is present in the boarding-alighting area outside the bus may be performed, for example, based on images (outside images) captured by another dedicated camera that is installed on an outer side of the bus and that captures a boarding-alighting area for the bus.

The notifying section 44 gives notice that there is an alighting passenger when the alighting determination section 42 determines that a passenger who is going to alight from the bus is present. Moreover, the notifying section 44 gives notice that boarding is allowed when the boarding determination section 43 determines that a passenger who is about to board the bus is present.

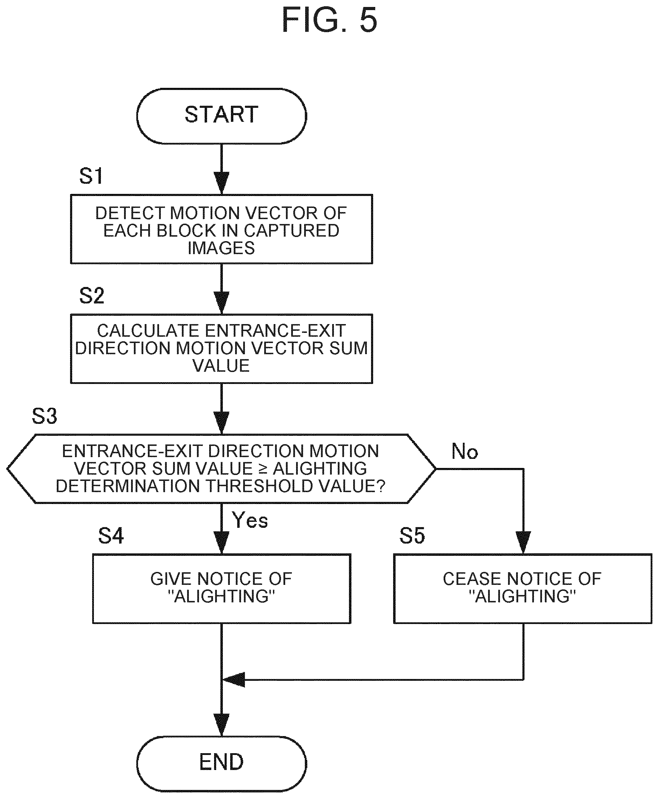

FIG. 5 is a flowchart that describes monitoring control according to the present embodiment, and is a flowchart that particularly describes processing for giving notice that there is an alighting passenger at a time of boarding and alighting from the bus.

In step S1, the monitoring control device 30, based on captured images received from the camera 11, detects a motion vector of each block in the monitoring range in the captured images.

In step S2, the monitoring control device 30 extracts, from among the blocks, a block having a motion vector in a direction toward the entrance-exit (boarding-alighting door) of the bus, and calculates a sum value obtained by adding up the size of the motion vector of each extracted block, that is, an entrance-exit direction motion vector sum value. As described earlier, the entrance-exit direction motion vector sum value may be a value obtained by adding up the size of a direction component toward the entrance-exit (boarding-alighting door) of the bus, of the motion vector of each block.

In step S3, the monitoring control device 30 determines whether the entrance-exit direction motion vector sum value is the predetermined alighting determination threshold value or greater. When the entrance-exit direction motion vector sum value is the alighting determination threshold value or greater, the monitoring control device 30 determines that a passenger who is going to alight from the bus is present, and moves to a process in step S4. When the entrance-exit direction motion vector sum value is less than the alighting determination threshold value, the monitoring control device 30 determines that a passenger who is going to alight from the bus is not present, and moves to a process in step S5.

In step S4, the monitoring control device 30 gives notice of the presence of an alighting passenger, by using at least one of the display 21 and the speaker 22. At the time, notice that passengers are asked to board the bus after the completion of alighting may be given together. For example, in a bus or the like performing autonomous driving, while the notice is being given, a time period for which the boarding-alighting door of the bus is opened is automatically extended such that the boarding-alighting door is not closed.

In step S5, when notice of the presence of an alighting passenger has been being given, the monitoring control device 30 ceases the notice.

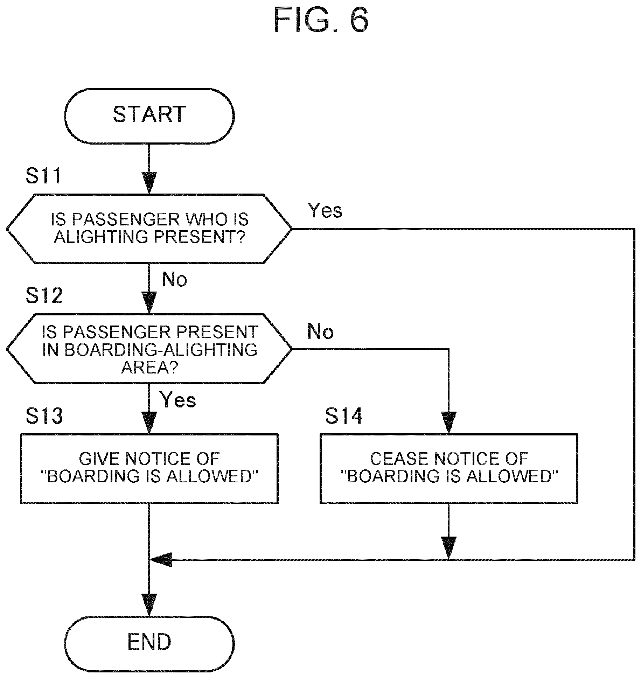

FIG. 6 is a flowchart that describes the monitoring control according to the present embodiment, and is a flowchart that particularly describes processing for giving notice that boarding is allowed at a time of boarding and alighting from the bus.

In step S11, the monitoring control device 30 determines whether a passenger who is going to alight from the bus is present. When a passenger who is going to alight from the bus is not present, that is, when a notice of "alighting" ceases, the monitoring control device 30 moves to a process in step S12. When a passenger who is going to alight from the bus is present, that is, when a notice of "alighting" is being given, the monitoring control device 30 terminates the current processing.

In step S12, the monitoring control device 30 determines whether a passenger who is about to board the bus is present in a boarding-alighting area outside the bus, based on captured images received from the camera 11, by detecting a human appearing in the boarding-alighting area outside the bus in the captured images and tracking the detected human along a time series. When a passenger who is about to board the bus is present in the boarding-alighting area outside the bus, the monitoring control device 30 moves to a process in step S13. When a passenger who is about to board the bus is not present in the boarding-alighting area outside the bus, the monitoring control device 30 moves to a process in step S14.

In step S13, the monitoring control device 30 gives notice that boarding the bus is allowed, by using at least one of the display 21 and the speaker 22. For example, in a bus or the like performing autonomous driving, while the notice is being given, a time period for which the boarding-alighting door of the bus is opened is automatically extended such that the boarding-alighting door is not closed.

In step S14, when the monitoring control device 30 has been giving notice that boarding the bus is allowed, the monitoring control device 30 ceases the notice. For example, in a bus or the like performing autonomous driving, after the notice is ceased, the boarding-alighting door is closed at a departure time, and the bus is started to move.

The monitoring control device 30 according to the present embodiment as described above is configured to monitor the behavior of an object in a predetermined monitoring-target area, based on captured images in which the monitoring-target area appears. Specifically, the monitoring control device 30 is configured to divide a predetermined range in each captured image into a plurality of blocks, to detect a motion vector of each block, and to determine, based on the direction and the size of the motion vector of each block, whether an object moving toward an entrance-exit of the monitoring-target area is present in the captured images, without detecting the object appearing in the captured images.

In more detail, the monitoring control device 30 is configured to extract, from among the blocks, a block having a motion vector in a direction toward the entrance-exit of the monitoring-target area, to calculate a sum value of the sizes of the motion vectors of the extracted blocks as an entrance-exit direction motion vector sum value, and to determine that an object moving toward the entrance-exit of the monitoring-target area is present when the entrance-exit direction motion vector sum value is the alighting determination threshold value (predetermined threshold value) or more. Alternatively, the monitoring control device 30 is configured to calculate a sum value of the size of a direction component, of the motion vector of each block, toward the entrance-exit of the monitoring-target area as an entrance-exit direction motion vector sum value, and to determine that an object moving toward the entrance-exit of the monitoring-target area is present when the entrance-exit direction motion vector sum value is the alighting determination threshold value (predetermined threshold value) or more.

As described above, according to the present embodiment, it is possible to infer the behavior of an object in captured images, based on the direction and the size of a motion vector of each block in the captured images, without detecting the object in the captured images in which a predetermined area appears. Accordingly, in determination of whether an object moving toward the entrance-exit of the area is present in the captured images, it is possible to restrain the determination from being influenced by an environment in the area, such as the degree of crowdedness, the level of illumination, or the like in the area.

Moreover, the monitoring control device 30 according to the present embodiment is configured to monitor the behavior of a passenger in a bus, based on captured images in which a passenger area inside the bus appears, and is configured to give notice of the presence of an alighting passenger via the notifying device 20 installed in the bus when a passenger moving toward the entrance-exit of the bus is present in the bus.

Thus, it is possible to notify, via the notifying device 20, the presence of the passenger moving toward the entrance-exit of the bus, for example, to a passenger outside the bus who is going to board the bus. Accordingly, it is possible to encourage the passenger who is going to board the bus to wait outside the bus until the passenger in the bus alights from the bus, and thus to restrain the passenger who is alighting from the bus and the passenger who is boarding the bus from being snarled up. As a result, it is possible to enhance safety at a time of boarding and alighting, and also to reduce time taken for boarding and alighting.

In the present embodiment, the monitoring range (predetermined range) in a captured image is a range where a passenger can move inside a bus, and is a range that does not include a window of the bus.

Thus, since a motion vector that represents the direction and the size of a movement of an object outside the window is not detected, it is possible to infer the behavior of a passenger in the vehicle with high accuracy.

When a passenger moving toward the entrance-exit is not present in the bus with the boarding-alighting door opened, the monitoring control device 30 according to the present embodiment is configured to give notice that boarding the bus is allowed, via the notifying device 20, when a passenger outside who is present in front of the boarding-alighting door of the bus is detected based on captured images or outside images in which a view outside the bus appears.

Thus, it is possible to notify an appropriate timing of boarding the bus, for example, to a passenger outside the bus who is going to board the bus.

Although an embodiment of the present disclosure has been described hereinabove, the embodiment only illustrates some of application examples of the present disclosure, and is not intended to limit the technical scope of the present disclosure to the specific configurations in the embodiment.

Moreover, for example, the computer program that is executed by the monitoring control device 30 in the embodiment may be provided in a form of being recorded on a computer-readable removable recording medium, such as a semiconductor memory, a magnetic recording medium, or an optical recording medium.

## Claims

1. A monitoring control device (30) comprising a processor (33) configured to:
monitor behavior of an object in a predetermined area, based on a captured image in which the area appears;
divide a predetermined range in the captured image into a plurality of blocks;
detect a motion vector of each of the blocks; and
determine, based on a direction and a size of the motion vector of each of the blocks, whether the object moving toward an entrance-exit of the area is present in the captured image, without detecting the object appearing in the captured image.

2. The monitoring control device (30) according to claim 1, wherein the processor (33) is configured to:
extract, from among the blocks, the block having the motion vector in a direction toward the entrance-exit of the area;
calculate a sum value of the sizes of the motion vectors of the blocks extracted; and
when the sum value is a predetermined threshold value or greater, determine that the object moving toward the entrance-exit of the area is present.

3. The monitoring control device (30) according to claim 1, wherein the processor (33) is configured to:
calculate a sum value of sizes of direction components of the motion vectors of the individual blocks, the direction components being toward the entrance-exit of the area; and
when the sum value is a predetermined threshold value or greater, determine that the object moving toward the entrance-exit of the area is present.

4. The monitoring control device (30) according to any one of claims 1 to 3, wherein
the area is an inside of a bus, and the object is a passenger, and
the processor (33) is configured to, when the passenger moving toward the entrance-exit of the bus is present in the bus, give notice of presence of the passenger alighting, via a notifying device provided in the bus.

5. The monitoring control device (30) according to claim 4, wherein the predetermined range in the captured image is a range in which the passenger is able to move inside the bus, and is a range that does not include a window of the bus.

6. The monitoring control device (30) according to claim 4, wherein the processor (33) is configured to, when the passenger moving toward the entrance-exit is not present in the bus with a boarding-alighting door opened, give notice that boarding the bus is allowed, via the notifying device, when the passenger outside who is present in front of the boarding-alighting door of the bus is detected based on the captured image or an outside image in which a view outside the bus appears.

7. A monitoring method comprising:
monitoring behavior of an object in a predetermined area, based on a captured image in which the area appears;
dividing a predetermined range in the captured image into a plurality of blocks and detecting a motion vector of each of the blocks; and
determining, based on a direction and a size of the motion vector of each of the blocks, whether the object moving toward an entrance-exit of the area is present in the captured image, without detecting the object appearing in the captured image.

8. A non-transitory storage medium storing instructions that are executable by one or more processors and that cause the one or more processors to perform functions, the one or more processors being included in a monitoring control device configured to monitor behavior of an object in a predetermined area based on a captured image in which the area appears, the functions comprising:
dividing a predetermined range in the captured image into a plurality of blocks;
detecting a motion vector of each of the blocks; and
determining, based on a direction and a size of the motion vector of each of the blocks, whether the object moving toward an entrance-exit of the area is present in the captured image, without detecting the object appearing in the captured image.
